(19) Europäisches Patentamt
European Patent Office
Office européen des brevets

(11) Veröffentlichungsnummer : **0 061 628**
**B1**

(12) # EUROPÄISCHE PATENTSCHRIFT

(45) Veröffentlichungstag der Patentschrift : **26.06.85**

(51) Int. Cl.$^4$ : **C 09 J 3/00**, C 08 L 75/04, C 08 L 57/00, C 08 L 9/00, C 08 L 21/02

(21) Anmeldenummer : **82102027.8**

(22) Anmeldetag : **13.03.82**

(54) **Verwendung von in Wasser dispergierbaren Polyisocyanat-Zubereitungen als Zusatzmittel für wässrige Klebstoffe.**

(30) Priorität : **27.03.81 DE 3112117**

(43) Veröffentlichungstag der Anmeldung : **06.10.82 Patentblatt 82/40**

(45) Bekanntmachung des Hinweises auf die Patenterteilung : **26.06.85 Patentblatt 85/26**

(84) Benannte Vertragsstaaten : **AT BE CH DE FR GB IT LI SE**

(56) Entgegenhaltungen :
**DE-A- 2 822 394**
**FR-A- 2 196 378**
**GB-A- 1 129 408**
**GB-A- 1 444 933**

(73) Patentinhaber : **BAYER AG**
**Konzernverwaltung RP Patentabteilung**
**D-5090 Leverkusen 1 Bayerwerk (DE)**

(72) Erfinder : **Hombach, Rudolf, Dr.**
**Johann-Janssen-Strasse 24**
**D-5090 Leverkusen 1 (DE)**
Erfinder : **Reiff, Helmut, Dr.**
**Walter-Flex-Strasse 16**
**D-5090 Leverkusen 1 (DE)**
Erfinder : **Wenzel, Wolfgang, Dr.**
**Peter-Landwehr-Strasse 13**
**D-5060 Bergisch-Gladbach 2 (DE)**
Erfinder : **Dollhausen, Manfred, Dr.**
**Herzogenfeld 21**
**D-5068 Odenthal (DE)**

**EP 0 061 628 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft die Verwendung von bestimmten, in Wasser dispergierbaren Polyisocyanat-Zubereitungen als Zusatzmittel für wäßrige Klebstoffe auf Basis von in Wasser dispergierbaren Polymeren.

Es ist bekannt, Polyisocyanate als Zusatzmittel für Klebstoffe aus Basis von in organischen Lösungsmitteln gelösten Polymeren zu verwenden. So setzt man z. B. Lösungen aus Natur- oder Synthesekautschuk oder Lösungen von Polyurethanen polyfunktionelle Polyisocyanate zu, um eine günstigere Haftung an vielen zu klebenden Werkstoffen, eine höhere Beständigkeit der Klebung in der Wärme und eine bessere Widerstandsfähigkeit gegen Chemikalien zu erzielen.

Die GB-A-1 129 408 befaßt sich mit der Verwendung von Dispersionen von Polyisocyanaten bei einem modifizierten Vulkanisationsverfahren zur Herstellung von Verbunden aus Glasoberflächen mit natürlichem oder synthetischem Gummi. Bei diesem Verfahren wird zunächst die Glasoberfläche mit einem wäßrigen Dispersionsklebstoff beschichtet, der eine Dispersion eines Polyisocyanats enthält. Anschließend wird die so beschichtete Glasoberfläche in Kontakt mit einem vulkanisierbaren Kautschuk gebracht, der anschließend vulkanisierbaren Kautschuk gebracht, der anschließend vulkanisiert wird. Hierbei werden vorzugsweise als Polyisocyanate blockierte Polyisocyanate verwendet. Die Verwendung von in Wasser dispergierbaren Polyisocyanatzubereitungen der nachstehend näher beschriebenen erfindungsgemäßen Art als Zusatzmittel für Klebstoffdispersionen wird in dieser Vorveröffentlichung auch nicht andeutungsweise angesprochen.

Die GB-A-1 444 933 beschreibt die Verwendung von wäßrigen Emulsionen von Emulgatoren enthaltenden Polyisocyanat-Zubereitungen als Klebstoff oder als Bindemittel für Beschichtungsmittel. Eine Anregung, ganz bestimmte, hydrophil-modifizierte Polyisocyanat-Zubereitungen, nämlich solche der nachstehend näher beschriebenen erfindungsgemäßen Art auszuwählen, um die ausgewählten, hydrophil-modifizierten Polyisocyanat-Zubereitungen in Substanz wäßrigen Klebstoffdispersionen einzuverleiben, ist dieser Vorveröffentlichung nicht zu entnehmen.

Die FR-A-2 196 378 beschreibt die Verwendung von hydrophoben Lösungen von Polyisocyanaten und kann daher die Verwendung von hydrophil-modifizierten Polyisocyanat-Zubereitungen in Substanz als Zusatzmittel für Klebstoffdispersionen ebenfalls nicht nahelegen.

Wie jetzt gefunden wurde, gelingt es die klebtechnischen Eigenschaften von wäßrigen Klebstoffen auf Basis von in Wasser dispergierbaren Polymeren durch Zusatz ganz bestimmter, nachstehend näher beschriebener, hydrophil modifizierter Polyisocyanate zu verbessern.

Dieser Befund muß als überraschend angesehen werden da erwartet werden mußte, daß die Isocyanatgruppen des hydrophil modifizierten Polyisocyanats mit dem im Überschuß vorliegenden Wasser unter Bildung von Polyharnstoffen abreagieren, ohne jeglichen Einfluß auf die klebetechnischen Eigenschaften des dispergierten Polymeren. Besonders überraschend ist auch der Befund, daß die nachstehend näher beschriebene erfindungsgemäße Verwendung auch im Falle von Klebstoffdispersionen auf Basis von Polymeren, die keine oder nur eine geringe Konzentration an aktiven Wasserstoffatomen aufweisen, zu einer merklichen Verbesserung der klebetechnischen Eigenschaften führt.

Gegenstand der Erfindung ist daher die Verwendung von in Wasser dispergierbaren Polyisocyanat-Zubereitungen einer (mittleren) NCO-Funktionalität von mindestens 2,2, enthaltend

a) ein aromatisches Polyisocyanat einer NCO-Funktionalität von mindestens 3 oder ein Gemisch aromatischer Polyisocyanate mit einer mittleren NCO-Funktionalität von mindestens 2,2 und

b) eine die Dispergierbarkeit der Polyisocyanate gewährleistende Menge eines Umsetzungsprodukts eines aromatischen Polyisocyanats mit einem ein- oder mehrwertigen, nicht-ionischen Polyalkylenether-Alkohol mit mindestens einer mindestens 10 Ethylenoxideinheiten aufweisenden Polyetherkette als Emulgator

als Zusatzmittel für wäßrige Klebstoffe auf Basis von in Wasser dispergierten Polymeren, wobei das Zusatzmittel den in Wasser dispergierten Polymeren in Substanz zugesetzt wird.

Die erfindungsgemäß zu verwendenden Polyisocyanat-Zubereitungen weisen eine (mittlere) NCO-Funktionalität von mindestens 2,2, vorzugsweise 3 bis 5 und einen NCO-Gehalt von 15 bis 45, vorzugsweise 20 bis 35 Gew.-% auf. Ihre Dispergierbarkeit in Wasser wird durch einen hierzu ausreichenden Gehalt an geeigneten Emulgatoren gewährleistet.

Bei den emulgatorfreien Polyisocyanaten handelt es sich um aromatische Polyisocyanate einer NCO-Funktionalität von mindestens 3, im allgemeinen von 3 bis 5 oder um Gemische aromatischer Polyisocyanate einer mittleren NCO-Funktionalität von mindestens 2,2, vorzugsweise 2,3-4. Die emulgatorfreien Polyisocyanate weisen im allgemeinen einen NCO-Gehalt von 15 bis 45, vorzugsweise 20 bis 35 Gew.-% auf. Gut geeignet sind beispielsweise die als « Klebstoff-Polyisocyanate » bekannten Polyisocyanate wie z. B. 4,4',4''-Triphenylmethantriisocyanat oder Thiophosphorsäure-tris-(p-isocyanato-phenyl)-ester.

Besonders gut geeignet sind auch die als Polyisocyanatgemische der Diphenylmethanreihe bekannten Phosgenierungsprodukte von Anilin/Formaldehyd-Kondensaten, die neben 2,2'-, 2,4'- und insbesondere 4,4'-Diisocyanatodiphenylmethan unterschiedliche Anteile an höheren Homologen enthalten, und die bezüglich der NCO-Funktionalität und bezüglich des NCO-Gehaltes den oben gemachten Angaben

entsprechen. Der Gehalt derartiger Polyisocyanatgemische der Diphenylmethanreihe an höheren Homologen kann gewünschtenfalls durch Abdestillieren eines Teils der Diisocyanate erhöht werden.

Geeignete Emulgatoren sind Umsetzungsprodukte aromatischer Polyisocyanate mit einem ein- oder mehrwertigen, nicht-ionischen Polyalkylenether-Alkohol mit mindestens einer mindestens 10 Ethylenoxideinheiten aufweisenden Polyetherkette. Zur Herstellung der Emulgatoren geeignete Polyisocyanate sind neben den bereits o. g. Polyisocyanaten auch beliebige andere aromatische Diisocyanate wie z. B. 4,4'-Diisocyanatodiphenylmethan, 2,4'- und/oder 2,6'-Diisocyanatotoluol. Die Polyetherkette enthält im allgemeinen 10 bis 70 vorzugsweise 15 bis 60 Ethylenoxideinheiten. Die in den Emulgatoren vorliegenden Polyetherketten weisen in allgemeinen 10-70, vorzugsweise 15-60, Alkylenoxideinheiten auf und stellen entweder reine Polyethylenoxid-Ketten oder gemischte Polyalkylenoxid-Ketten dar, deren Alkylenoxideinheiten zu mindestens zu 60 % aus Ethylenoxideinheiten bestehen, von diesem jedoch, wie gesagt, mindestens 10 enthalten. Die entsprechenden einwertigen Polyetheralkohole sind besonders gut zur Herstellung der Emulgatoren geeignet.

Die Herstellung der Emulgatoren erfolgt durch Umsetzung der aromatischen Polyisocyanate mit den hydrophilen Verbindungen mit gegenüber Isocyanatgruppen reaktionsfähigen Gruppen, vorzugsweise mit den genannten, nichtionisch hydrophilen Polyetheralkoholen in einem NCO/OH-Äquivalentverhältnis von mindestens 1 : 1, im allgemeinen von 2 : 1 bis ca. 1 000 : 1. Insbesondere bei Verwendung von mehrwertigen Polyetheralkoholen wird in einem NCO/OH-Äquivalentverhältnis von mindestens 2 : 1 gearbeitet. Die Emulgatoren können entweder in einem getrennten Reaktionsschritt durch Umsetzung der genannten Ausgangsmaterialien hergestellt und anschließend mit dem in eine emulgierbare Form zu überführenden Polyisocyanat abgemischt oder in situ dergestalt hergestellt werden, daß man das in eine emulgierbare Form zu überführende aromatische Polyisocyanat mit einer entsprechenden Menge des Polyetheralkohols abmischt, wobei spontan eine erfindungsgemäß zu verwendende Polyisocyanat-Zubereitung entsteht, die neben unmodifiziertem aromatischem Polyisocyanat den sich in situ aus der hydrophilen Verbindung mit gegenüber Isocyanatgruppen reaktionsfähigen Gruppen, vorzugsweise aus dem Polyetheralkohol und einem Teil des Polyisocyanats bildenden Emulgator enthält. Bei der erstgenannten Variante der separaten Herstellung der erfindungswesentlichen Emulgatoren werden diese vorzugsweise unter Einhaltung eines NCO/OH-Äquivalentverhältnisses von ca. 2 : 1 bis 6 : 1 hergestellt. Bei der Herstellung der Emulgatoren in situ kann selbstverständlich ein hoher Überschuß an Isocyanatgruppen innerhalb des o. g. breiten Bereichs zur Anwendung gelangen. Die Menge des mit dem in eine emulgierbare Form zu überführenden Polyisocyanat abzumischenden Emulgators bzw. die Menge des dem in eine emulgierbare Form zu überführenden Polyisocyanat zugesetzten Polyetheralkohols wird im allgemeinen so bemessen, daß in der letztlich erhaltenen, erfindungsgemäß zu verwendenden Polyisocyanat-Zubereitung 1 bis 12 Gew.-%, vorzugsweise 3 bis 8 Gew.-% an innerhalb von Polyetherketten angeordneten Ethylenoxideinheiten vorliegen. Die Herstellung der Emulgatoren bzw. die Herstellung der Polyisocyanat-Zubereitung erfolgt im allgemeinen bei Raumtemperatur oder bei mäßig erhöhter Temperatur, d. h. im Temperaturbereich von ca. 20 bis 80 °C.

Die so erhaltenen Polyisocyanat-Zubereitungen werden erfindungsgemäß entweder in Substanz oder in Form wäßriger Dispersionen mit einem Feststoffgehalt von ca. 10 bis 65 verarbeitet. Die Herstellung dieser Dispersionen bzw. Emulsionen erfolgt kurz vor der erfindungsgemäßen Verwendung durch einfaches Vermischen der spontan in Wasser dispergierbaren Polyisocyanat-Zubereitungen mit Wasser.

Die erfindungsgemäße Verwendung eignet sich insbesondere zur Modifizierung von wäßrigen Klebstoffen auf Basis von wäßrigen Dispersionen eines Feststoffgehalts von 10 bis 65 Gew.-%, vorzugsweise 20 bis 60 Gew.-%, ausgewählt aus der Gruppe bestehend aus Naturlatex, wäßrigen Dispersionen von Homo- oder Copolymerisaten olefinisch ungesättigter Monomerer und den an sich bekannten wäßrigen Polyurethandispersionen. Diese Dispersionen können selbstverständlich die in der Klebstofftechnologie üblichen Hilfs- und Zusatzmittel enthalten.

Geeignete Dispersionen von Homo- oder Copolymerisaten olefinisch ungesättigter Monomerer sind z. B. an sich bekannte Dispersionen von Homo- oder Copolymerisaten auf Basis von Vinylestern von Carbonsäuren mit 2 bis 18, vorzugsweise 2 bis 4, Kohlenstoffatomen wie insbesondere Vinylacetat, gegebenenfalls mit bis zu 70 Gew.-%, bezogen auf Gesamtmenge an olefinisch ungesättigten Monomeren, an anderen olefinisch ungesättigten Monomeren und/oder Homo- oder Copolymerisaten von Acrylsäureestern von Alkoholen mit 1 bis 18, vorzugsweise 1 bis 4, Kohlenstoffatomen wie insbesondere Acrylsäure-, methyl-, ethyl-, propyl-, -hydroxyethyl- oder hydroxypropyl-estern, gegebenenfalls zusammen mit bis zu 70 Gew.-% an anderen olefinisch ungesättigten Monomeren und/oder Butadien-Styrol-Copolymerisaten mit einem Gehalt an Butadien von ca. 20 bis 60 Gew.-%, und/oder andere Dien-Polymerisaten oder -Copolymerisaten wie Polybutadien oder Mischpolymerisaten von Butadien mit anderen olefinisch ungesättigten Monomeren wie. z. B. Styrol, Acrylnitril und/oder Methacrylnitril und/oder wäßrige Dispersionen von Polymerisaten bzw. Copolymerisaten des 2-Chlor-butadien-1,3, gegebenenfalls mit anderen olefinisch ungesättigten Monomeren der oben beispielhaft genannten Art, insbesondere solchen eines Chlorgehalts von ca. 30 bis 40 Gew.-%, insbesondere eines Chlorgehalts von ca. 36 Gew.-%.

Geeignete wäßrige Polyurethandispersionen sind solche der an sich bekannten Art, wie sie z. B. in US-PS-3 479 310, GB-PS-1 076 688, US-PS-4 108 814, US-PS-4 092 286, DE-OS-2 651 505, US-PS-4 190 566, DE-OS-2 732 131 oder DE-OS-2 811 148 beschrieben sind.

Die bei der erfindungsgemäßen Verwendung einzusetzenden wäßrigen Klebstoffe können die in der Klebstofftechnologie üblichen Hilfs- und Zusatzmittel enthalten. Hierzu gehören beispielsweise Füllstoffe, wie Quarzmehl, Quarzsand, hochdisperse Kieselsäure, Schwerspat, Calciumcarbonat, Kreide, Dolomit oder Talkum, die oft zusammen mit geeigneten Netzmitteln wie z. B. Polyphosphaten wie Natriumhexamethaphosphat, Naphthalinsulfonsäure, Ammonium- oder Natriumpolyacrylsäuresalze eingesetzt werden, wobei sie im Netzmittel im allgemeinen in Mengen von 0,2 bis 0,6 Gew.-%, bezogen auf Füllstoff, zugesetzt werden.

Weitere geeignete Hilfsmittel sind z. B. in Mengen von 0,01 bis 1 Gew.-%, bezogen auf Gesamtklebstoff, einzusetzende organische Verdickungsmitel wie z. B. Zellulose-Derivate, Alginate, Stärke oder Stärkederivate oder Polyacrylsäure oder in Mengen von 0,05 bis 5 Gew.-%, bezogen auf Gesamtklebstoff, einzusetzende anorganische Verdickungsmittel wie z. B. Bentonite.

Auch Fungizide zur Konservierung können den Klebstoffen zugesetzt werden. Diese kommen im allgemeinen in Mengen von 0,02 bis 1 Gew.-%, bezogen auf Gesamtklebstoff, zum Einsatz. Geeignete Fungizide sind Phenol- und Kresol-Derivate oder Zinn-organische Verbindungen.

Auch klebrig machende Harze wie z. B. Naturharze oder modifizierte Harze wie Kolophoniumester oder synthetische Harze wie Phthalatharze können dem Klebstoffgemisch zugesetzt werden.

Die erfindungsgemäß zu verwendenden Polyisocyanat-Zubereitungen werden den wäßrigen Klebstoffen im allgemeinen in einer Menge von 1 bis 20, vorzugsweise 2 bis 10 Gew.-%, bezogen auf Bindemittel, zugesetzt.

Die so modifizierten wäßrigen Klebstoffe eignen sich zum Verkleben beliebiger Werkstoffe gleicher oder verschiedener Art, z. B. zum Verkleben von Holz und Papier, Kunststoffen, Textilien, Leder und anorganischen Materialien, wie Keramik, Steingut oder Asbestzement.

Der erfindungsgemäße Zusatz der erfindungswesentlichen Polyisocyanat-Zubereitungen zu den wäßrigen Klebstoffen bewirkt insbesondere eine deutliche Verbesserung der Scherfestigkeit, der Wasserfestigkeit, der Haftung und der Wärmefestigkeit der Klebungen.

Die nachfolgenden Beispiele dienen zur weiteren Erläuterung der Erfindung. Alle Prozentangaben beziehen sich auf Gewichtsprozente.

Beispiel 1

In einem 3 l Rührbecher mit Rückflußkühler werden unter Stickstoff zu 1 870 g eines Polyisocyanatgemischs der Diphenylmethanreihe mit einem Gehalt an Diisocyanato-Diphenylmethan-Isomeren von ca. 60 % und einem Gehalt an höheren Homologen von ca. 40 % bei 40 °C in einem Guß 130 g der Verbindung der Formel

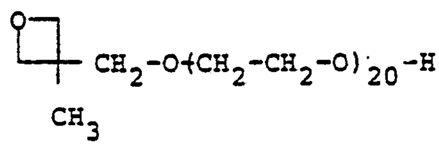

zugefügt. Nach 15 Minuten steigert man die Temperatur des Reaktionsgemischs auf 65 °C und hält 3 Stunden bei dieser Temperatur. Nach Abkühlen auf Raumtemperatur liegt eine erfindungsgemäß geeignete Polyisocyanat-Zubereitung in Form einer klaren, braunen Lösungen des in situ gebildeten Emulgators in überschüssigem Polyisocyanat vor. Der NCO-Gehalt der Zubereitung liegt bei ca. 28 %. Die mittlere NCO-Funktionalität liegt bei ca. 2,5, die Viskosität bei 650 mPas (23 °C).

2 g der so erhaltenen Polyisocyanat-Zubereitung werden mit 100 g einer anionischen wäßrigen Polyurethandispersion mit einem Feststoffgehalt von 40 % in einem Becherglas von Hand vermischt. Nach ca. 10 Sekunden liegt eine homogene Mischung der Komponenten vor.

Mit dieser Mischung und mit der unmodifizierten Dispersion wurden gemäß DIN 53 273 Klebungen hergestellt.

Als zu verklebender Werkstoff diente ein 4 mm dickes PVC-Material mit einem Gehalt von 30 % Dioctylphthalat als Weichmacher.

Vor dem Aufbringen der Klebstoffe wurden die zu klebenden Oberflächen der auf Streifen von 15 cm Länge und 3 cm Breite geschnittenen Werkstoffe mit Schleifband der Körnung 40 gründlich gerauht. Die vom Schliefstaub befreiten Werkstoffe wurden mit einer ca. 0,1 mm dicken Klebstoffschicht versehen. Nach einer Ablüftzeit von 30 Minuten wurden die Klebstoffoberflächen durch Strahlungswärme innerhalb von 3 Sekunden auf eine Temperatur von 80 bis 85 °C gebracht. Danach wurde unmittelbar zusammengefügt und 10 Sekunden mit einem Druck von 0,4 MPa gepreßt.

Zur Ermittlung der Wärmefestigkeit wurden 9 Tage bei Raumtemperatur gelagerte Prüfkörper einem Zeitstandschälversuch unterworfen. Hierbei wurde die Zeit ermittelt, während der die Klebung der Last von 10 N/cm bei einer Temperatur von 50 °C widerstanden. Die mit der unmodifizierten Dispersion hergestellte Verklebung widerstand der Belastung lediglich während eines Zeitraums von 9 Minuten. Die mit der erfindungsgemäß modifizierten Dispersion hergestellte Klebung war auch nach einer Zeitspanne von 180 Minuten praktisch unverändert.

## Beispiel 2

2 g der im Beispiel 1 beschriebenen Polyisocyanat-Zubereitung werden mit 100 g einer wäßrigen Dispersion eines Chloroprenkautschuks (Chlorgehalt 36 %) mit einem Feststoffgehalt von 58 % in einem Becherglas von Hand vermischt. Nach ca. 10 Sekunden Mischen wird eine homogene Mischung erhalten.

Mit dieser Mischung und mit dem unmodifizierten Latex wurden gemäß DIN 53 254 Klebungen hergestellt und die Scherfestigkeit ermittelt.

Für diese Prüfung werden nicht vorbehandelte Buchenholz-Probekörper mit dem Klebstoff eingestrichen. Innerhalb 15 Minuten nach Auftrag der Klebstoffe werden 2 Probekörper so zusammengelegt, daß eine überlappte Fläche von 2 $cm^2$ vorliegt, und 24 h mit einem Druck vom 3,0 MPa zusammengepreßt. Nach 9-tätiger Lagerung bei Raumtemperatur wird die Scherfestigkeit ermittelt. Dies erfolgt in einer Zugprüfmaschine mit einem Spindelvorschub von 100 mm/min.

Die Scherfestigkeit im Falle des modifizierten Latex' liegt bei 5,0 $N/mm^2$, im Falle des erfindungsgemäß modifizierten Latex wurde eine Scherfestigkeit von 9,3 $N/mm^2$ ermittelt.

Auf die gleiche Weise hergestellte Prüflinge werden nach der Verklebung zunächst während 9 Tagen bei Raumtemperatur und anschließend während 24 h in Wasser bei 23 °C gelagert und in nassem Zustand der gleichen Prüfung unterzogen. Im Falle des unmodifizierten Latex ergibt sich dann eine Scherfestigkeit von 0,4 $N/mm^2$ und im Falle des erfindungsgemäß modifizierten Latex eine Scherfestigkeit von 3,3 $N/mm^2$.

## Beispiel 3

2 g der Polyisocyanat-Zubereitung gemäß Beispiel 1 werden mit 100 g einer wäßrigen Dispersion eines Vinylacetat-Maleinsäure-n-Butylester-Copolymerisat mit einem Feststoffgehalt von 53 % in einem Becherglas von Hand vermischt. Nach 10 Sekunden Mischen wird eine homogene Mischung erhalten.

Die so erhaltene Klebstoffdispersion wird mit einer entsprechenden unmodifizierten Klebstoffdispersion nach der in Beispiel 2 beschriebenen Methode verglichen. Es wurden folgende Scherfestigkeiten ($N/mm^2$) ermittelt:

| | |
|---|---|
| Erfindungsgemäß modifiziert, 9-tägige Lagerung: | 6,7 |
| Unmodifiziert, 9-tägige Lagerung: | 3,0 |
| Erfindungsgemäß modifiziert, 24 h Lagerung in Wasser: | 0,9 |
| Unmodifiziert, 24 h Lagerung in Wasser: | 0,1 |

## Beispiel 4

2 g der in Beispiel 1 beschriebenen Polyisocyanat-Zubereitung werden mit 100 g einer Dispersion eines Copolymerisats aus 85 % Vinylacetat und 15 % Ethylen mit einem Feststoffgehalt von 50 % in einem Becherglas von Hand vermischt. Nach ca. 10 Sekunden Mischen wurde eine homogene Mischung erhalten.

Es wurden die im Beispiel 2 beschriebenen Testversuche durchgeführt und folgende Scherfestigkeiten ($N/mm^2$) ermittelt:

| | |
|---|---|
| Erfindungsgemäß modifiziert, 9-tätige Lagerung: | 8,8 |
| Unmodifiziert, 9-tätige Lagerung: | 5,4 |
| Erfindungsgemäß modifiziert, 24 h Lagerung in Wasser: | 2,3 |
| Unmodifiziert, 24 h Lagerung in Wasser: | 0,0 |

## Beispiel 5

2 g der in Beispiel 1 beschriebenen Polyisocyanat-Zubereitung werden mit 100 g einer wäßrigen Dispersion eines Copolymerisats aus 55 % Styrol und 45 % Butadien mit einem Feststoffgehalt von 50 % und mit einer Shore A Härte der Trockensubstanz von 48 in einem Becherglas von Hand vermischt. Nach ca. 10 Sekunden mischen wird eine homogene Mischung erhalten.

Die in Beispiel 2 beschriebene anwendungstechnische Prüfung ergab nach 9-tätiger Lagerung im Falle der modifizierten Dispersion eine Scherfestigkeit von 6,9 N/mm und im Falle der unmodifizierten Dispersion eine Scherfestigkeit von 3,9 N/mm.

## Beispiel 6

2 g in Beispiel 1 beschriebenen Polyisocyanat-Zubereitung werden mit 100 g einer wäßrigen Dispersion eines Copolymerisats aus 37 % Acrylnitril und 63 % Butadien mit einem Feststoffgehalt von 45 % und mit einer Defo-Härte der Trockensubstanz von 1 000, in einem Becherglas von Hand vermischt. Nach ca. 10 Sekunden Mischen wird eine homogene Mischung erhalten.

Der in Beispiel 2 beschriebene Test ergab folgende Scherfestigkeiten ($N/mm^2$):

| | |
|---|---|
| Modifiziert, 9-tätige Lagerung : | 4,6 |
| Unmodifiziert, 9-tätige Lagerung : | 1,4 |
| Modifiziert, 24 h Lagerung in Wasser : | 0 |
| Unmodifiziert, 24 h Lagerung in Wasser : | 1,9 |

**Patentansprüche**

1. Verwendung von in Wasser dispergierbaren Polyisocyanat-Zubereitungen einer (mittleren) NCO-Funktionalität von mindestens 2,2, enthaltend

a) ein aromatisches Polyisocyanat einer NCO-Funktionalität von mindestens 3 oder ein Gemisch aromatischer Polyisocyanate mit einer mittleren NCO-Funktionalität von mindestens 2,2 und

b) eine die Dispergierbarkeit der Polyisocyanate gewährleistende Menge eines Umsetzungsprodukts eines aromatischen Polyisocyanats mit einem ein- oder mehrwertigen, nicht-ionischen Polyalkylenether-Alkohol mit mindestens einer mindestens 10 Ethylenoxideinheiten aufweisenden Polyetherkette als Emulgator

als Zusatzmittel für wäßrige Klebstoffe auf Basis von in Wasser dispergierten Polymeren, wobei das Zusatzmittel den in Wasser dispergierten Polymeren in Substanz zugesetzt wird.

2. Verwendung gemäß Anspruch 1, dadurch gekennzeichnet, daß die Komponente a) der Polyisocyanat-Zubereitung ein Polyisocyanatgemisch der Diphenylmethanreihe darstellt.

3. Verwendung gemäß Anspruch 1, dadurch gekennzeichnet, daß der Polyalkylen-Polyether-Alkohol ein einwertiger Alkohol ist, wie er durch Alkoxylierung eines einwertigen Startermoleküls zugänglich ist, dessen Polyetherkette aus 10 bis 70 Alkylenoxideinheiten besteht, von denen mindestens 60 % Ethylenoxideinheiten darstellen.

4. Verwendung gemäß Anspruch 1, dadurch gekennzeichnet, daß der wäßrige Klebstoff aus einer gegebenenfalls in der Klebstoff-Technologie üblichen Hilfs- und Zusatzmittel enthaltenden wäßrigen Dispersion mit einem Feststoffgehalt von 10 bis 65 Gew.-%, ausgewählt aus der Gruppe bestehend aus Naturlatex, wäßrigen Dispersionen von Homo- oder Copolymerisaten olefinisch ungesättigter Monomerer und wäßrigen Polyurethandispersionen besteht.

5. Verwendung gemäß Anspruch 1 bis 4, dadurch gekennzeichnet, daß die Polyisocyanat-Zubereitung dem Klebstoff in einer Menge von 1 bis 20 Gew.-%, bezogen auf die Menge des dispergierten Bindemittels, zugemischt wird.

**Claims**

1. Use of water-dispersible polyisocyanate formulations having an (average) NCO functionality of at least 2.2 and containing

a) an aromatic polyisocyanates having an NCO-functionality of at least 3 or a mixture of aromatic polyisocyanates having an average NCO-functionality of at least 2.2 and

b) a quantity, which guarantees the dispersibility of the polyisocyanates, of a reaction product of an aromatic polyisocyanate with a mono- or polyhydric, non-ionic polyalkylene ether alcohol with at least one polyether chain containing at least 10 ethylene oxide units, as the emulsifier,

as additives for aqueous adhesives based on water-dispersible polymers, the additive being added as such to the polymers dispersed in water.

2. Use according to Claim 1, characterised in that component a) of the polyisocyanate formulation is a polyisocyanate mixture of the diphenylmethane series.

3. Use according to Claim 1, characterised in that the polyalkylene polyether alcohol is a monohydric alcohol of the type obtained by alkoxylating a monohydric starter molecule of which the polyether chain consists of 10 to 70 alkylene oxide units, of which at least 60 % represent ethylene oxide units.

4. Use according to Claim 1, characterised in that the aqueous adhesive consists of an aqueous dispersion which optionally contains auxiliaries and additives customary in adhesive technology, has a solids content of 10 to 65 % by weight and is selected from the group consisting of natural latex, aqueous dispersions of homo- or copolymers of olefinically unsaturated monomers and aqueous polyurethane dispersions.

5. Use according to Claim 1 to 4, characterised in that the polyisocyanate formulation is added to the adhesive in a quantity of 1 to 20 % by weight, based on the quantity of the dispersed binder.

**Revendications**

1. Utilisation de préparations de polyisocyanates dispersibles dans l'eau ayant une fonctionnalité NCO (moyenne) d'au moins 2,2, contenant

a) un polyisocyanate aromatique ayant une fonctionnalité NCO d'au moins 3 ou un mélange de polyisocyanates aromatiques ayant une fonctionnalité NCO moyenne d'au moins 2,2 et

b) une quantité, assurant la dispersibilité des polyisocyanates, d'un produit de réaction d'un polyisocyanate aromatique avec un polyalcoylène-éther-alcool non ionique, mono- ou polyvalent, ayant une chaîne polyéther présentant au moins 10 unités oxyde d'éthylène, comme émulsifiant,
en tant qu'additifs pour adhésifs aqueux à base de polymères dispersés dans de l'eau, l'additif étant ajouté en substance aux polymères dispersés dans de l'eau.

2. Utilisation selon la revendication 1, caractérisée en ce que le composant a) de la préparation de polyisocyanates est un mélange de polyisocyanates de la série du diphénylméthane.

3. Utilisation selon la revendication 1, caractérisée en ce que le polyalcoylène-éther-alcool est un alcool monovalent tel qu'on l'obtient par alcoxylation d'une molécule initiatrice monovalente, dont la chaîne polyéther consiste en 10 à 70 unités oxyde d'alcoylène parmi lesquelles au moins 60 % sont des unités oxyde d'éthylène.

4. Utilisation selon la revendication 1, caractérisée en ce que l'adhésif aqueux consiste en une dispersion aqueuse contenant éventuellement les auxiliaires et additifs en usage dans la technologie des adhésifs, laquelle a une teneur en matière solide de 10 à 65 % en poids et est choisie dans le groupe consistant en latex naturel, en dispersions aqueuses d'homo- ou copolymères de monomères oléfiniquement insaturés et en dispersions aqueuses de polyuréthanes.

5. Utilisation selon les revendications 1 à 4, caractérisée en ce que la préparation de polyisocyanates est mélangée à l'adhésif en une quantité de 1 à 20 % en poids, par rapport à la quantité du liant dispersé.